# EUROPÄISCHE PATENTSCHRIFT

(11) **EP 0 553 723 B1**
(45) Veröffentlichungstag und Bekanntmachung des Hinweises auf die Patenterteilung: **20.03.1996**
(21) Anmeldenummer: 93100942.7
(22) Anmeldetag: 22.01.1993
(51) Int. Cl.: E04B 1/68, E01C 11/10, E02D 29/16, F16J 15/32, E21D 11/38, E03F 3/04, E02B 7/54

(54) **Dichtungseinrichtung für aneinanderstossende Bauteile, insbesondere Betonformteile**
Sealing joint for construction elements in contact, especially for concrete elements
Joint d'étanchéité pour éléments de construction en contact, notamment éléments en béton

(30) Priorität: 25.01.1992 DE 4202005
(43) Veröffentlichungstag der Anmeldung: 04.08.1993
(73) Patentinhaber: Georg Prinzing GmbH & Co. KG Betonformen- und Maschinenfabrik, D-89143 Blaubeuren (DE)
(72) Erfinder: Kraiss, Richard, W-7903 Laichingen-Suppingen (DE)
(74) Vertreter: Kratzsch, Volkhard, Dipl.-Ing.

(56) Entgegenhaltungen:
- DE-A- 2 412 087
- DE-A- 3 414 180
- DE-B- 1 159 712
- DE-C- 0 675 255
- LU-A- 0 068 622

## Beschreibung

Die Erfindung bezieht sich auf eine Dichtungseinrichtung für aneinanderstoßende Bauteile, insbesondere Betonformteile, der im Oberbegriff des Anspruchs 1 genannten Art.

Es ist eine Dichtungseinrichtung dieser Art bekannt (DE-OS 34 14 180),bei der die im Hohlraum des Dichtkörpers enthaltene Füllung entweder aus einem kompressiblen Medium oder statt dessen aus einer einspritzbaren und sich nach dem Einspritzen verfestigenden Masse, insbesondere einer aushärtbaren Masse, vorzugsweise aus zwei Komponenten, gebildet ist, die nach dem Aushärten ein unverformbares festes Material bildet, wodurch eine axiale Abstützung zweier vertikal aufeinandersitzender Bauteile über diese feste Masse erreicht ist, ohne daß die Bauteile dabei mit zugewandten Ringflächen aufeinander aufsitzen. Es hat sich gezeigt, daß eine aushärtbare Masse,z.B.bestehend aus zwei Komponenten, die nach dem Einspritzen zusammenwirken und das Aushärten bewirken, nicht praktikabel ist, so daß auf andere zuvor bekannte Dichtungseinrichtungen zurückgegriffen werden muß. Diese haben vielfältige Nachteile. Da die Dichtungseinrichtung innerhalb eines Spaltes verpreßt wird, müssen die Toleranzen sowohl für die Dichtungseinrichtung selbst als auch hinsichtlich der im Stoßbereich wirksamen Flächen der Bauteile sehr eng gewählt werden. Außerdem ist die sich ergebende Dichtungsfläche der aufeinandersitzenden Bauteile, an der die Dichtungseinrichtung anliegt, in der Regel zu schmal, so daß schon deswegen keine sichere Abdichtung gewährleistet ist, insbesondere auch deswegen, weil es z. B. bei aus Beton bestehenden Bauteilen nicht möglich ist, solche Betonteile herzustellen, die stets eine einwandfrei geschlossene Oberfläche im Bereich der Dichtflächen aufweisen. Vielmehr ist diese Oberfläche häufig porös und mit Lufteinschlüssen und Lunkern versehen, wodurch Undichtigkeiten entstehen. Häufig ist es deswegen erforderlich, die bauteilseitigen Dichtflächen zu kontrollieren und in aufwendiger Arbeit nachzubehandeln, z. B. mit einem Anstrich zu versehen. Werden mit Bauteilen in Form z. B. von Schachtringen aus Beton Schächte zusammengesetzt, so müssen sämtliche Schächte im Bereich der Dichtflächen kontrolliert werden. Bei bekannten Keildichtungen oder Rollringdichtungen beträgt die Breite der Dichtfläche, an der die Dichtungseinrichtung flächig anliegt, nur etwa 15 mm bis 20 mm, so daß bei der geringsten Undichtigkeit der Bauteiloberfläche eine Umläufigkeit entsteht, d. h. das Wasser nur einen Weg von 15 mm bis 20 mm zurücklegen muß,um die Dichtungseinrichtung zu umgehen. Durch Toleranzen der einzelnen Bauteile und der Dichtungseinrichtungen selbst ist die Verpressung dieser zusätzlich unterschiedlich, so daß die Dichtfläche bei geringer Verpressung noch kleiner wird. Es hat sich in der Praxis gezeigt, daß bei einer herkömmlichen Keildichtung oder Rollringdichtung eine Dichtheit nur erreicht werden kann durch Einhaltung sehr enger Toleranzen, ferner durch ständige Kontrolle der Dichtflächen und ferner ggf. durch Nachbehandlung dann, wenn Porösitäten und Oberflächenlöcher, z. B. Lunker, entstehen. Ein weiterer Nachteil liegt darin, daß die vertikalen Kräfte, und zwar Gewichtskräfte, der einzelnen vertikal aufeinanderliegenden Bauteile im Fall von Schachtringen zur Herstellung eines Schachtes plus Erddruck und ggf. Auftrieb plus zusätzlicher Verkehrslast über eine direkte Anlage Beton auf Beton übertragen wird. Da es nicht möglich ist, die Betonfläche absolut eben herzustellen, und da der Beton sehr hart ist und somit keinerlei ausgleichende Funktion hat, ergeben sich daraus Punkt lasten. Dies führt bei hohen Belastungen zu Beschädigungen und Abplatzungen an den Bauteilen. Außerdem kann es vorkommen, daß die Bauteile Risse bekommen oder komplett auseinanderbrechen.

Der Erfindung liegt cie Aufgabe zugrunde, eine Dichtungseinrichtung der im Oberbegriff des Anspruchs 1 genannten Art zu schaffen, die die aufgezeigten Nachteile beseitigt.

Die Aufgabe ist bei einer Dichtungseinrichtung der im Oberbegriff des Anspruchs 1 definierten Art gemäß der Erfindung durch die Merkmale im Kennzeichnungsteil des Anspruchs 1 gelöst. Durch eine solche Dichtungseinrichtung werden vielfältige Vorteile erzielt, die in der speziellen Beschreibung im Detail niedergelegt sind, auf die zur Vermeidung unnötiger Wiederholungen hier verwiesen wird.

Vorteilhafte Ausführungsformen ergeben sich aus den Ansprüchen 2 bis 28.

Die Erfindung betrifft ferner ein Verfahren zur Herstellung einer Dichtungseinrichtung nach Anspruch 1. Durch die Merkmale im Anspruch 29 ist in kostengünstiger und einfacher Weise eine derartige Dichtungseinrichtung herstellbar. Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen Schnitt zweier vertikal aneinanderstoßender Betonformteile mit einer im Stoßbereich angeordneten Dichtungseinrichtung gemäß einem ersten Ausführungsbeispiel,
- Fig. 2: einen schematischen Schnitt zweier vertikal aneinanderstoßender Betonformteile mit im Stoßbereich angeordneter Dichtungseinrichtung, im noch unbelasteten Zustand und gemäß einem zweiten Ausführungsbeispiel,
- Fig. 3: einen schematischen Schnitt etwa entsprechend demjenigen in Fig. 2, jedoch im belasteten Zustand,
- Fig. 4 und 5: jeweils einen schematischen Schnitt etwa entsprechend demjenigen in Fig. 1 eines dritten bzw. vierten Ausführungsbeispieles.

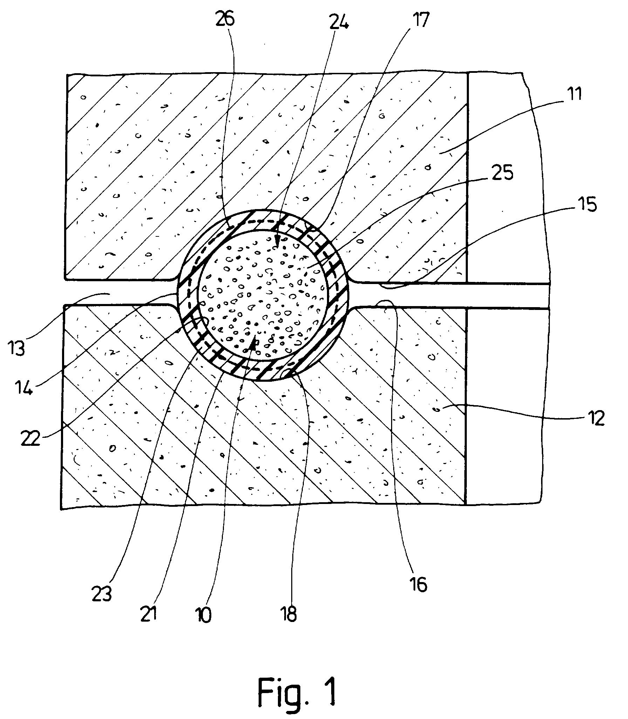

In Fig. 1 ist ein erstes Ausführungsbeispiel einer Dichtungseinrichtung 10 gezeigt, die für einanderstoßende Bauteile 11 und 12, die hier als Betonformteile ausgebildet sind, bestimmt ist. Insbesondere ist die Dichtungseinrichtung 10 für vertikal aneinanderstoßende Bauteile 11 und 12 vorgesehen. Die Bauteile 11 und 12 können nahezu beliebiger Art sein, z. B. Straßen- oder Hofabläufe, Schachtringe, Schachthälse, Schornsteinelemente, Wand- oder Mauerelemente, Rohre od. dgl., die mit Vorzug übereinander versetzt werden, so daß für den Anpreßdruck der einzelnen Bauteile 11 und 12 an die im Stoßbereich angeordnete Dichtungseinrichtung 10 sets die Gewichtskraft der Bauteile, insbesondere des oberen Bauteiles 11,zur Verfügung steht.

Beide Bauteile 11 und 12 bilden im Stoßbereich 13 eine zumindest annähernd kreisringförmige Kammer 14, in der die Dichtungseinrichtung 10 zumindest im wesentlichen gänzlich aufgenommen ist. Die Kammer 14 ist dadurch gebildet, daß in den einander zugewandten Stirnflächen 15 und 16 jeweils im Querschnitt etwa halbkreisförmige Nuten 17 bzw. 18 vorgesehen sind. Der Kreisquerschnitt der Kammer 14 kann dabei zumindest in etwa demjenigen der Dichtungseinrichtung 10 entsprechen.

Die Dichtungseinrichtung 10 ist in die Nut 18 des unteren Bauteiles 12 eingelegt worden, woraufhin das obere Bauteil 11 mit seiner Stirnfläche 15 auf das untere Bauteil 12 und dabei so aufgesetzt wird, daß der obere Teil der Dichtungseinrichtung 10 in der stirnseitigen Nut 17 des oberen Bauteiles 11 aufgenommen wird. Die Dichtungseinrichtung 10 wird innerhalb der Kammer 14 unter dem Gewichtseinfluß des oberen Bauteiles 11, das auf die Dichtungseinrichtung 10 drückt, durch entsprechende Kompression verformt. Die Dichtungseinrichtung 10 weist einen in dieser Weise durch Kompression verformbaren Dichtkörper 21 auf, der aus zumindest im wesentlichen elastischem Material besteht, z. B. aus elastischem Gummi, Kunstgummi, einem elastomeren Kunststoff od. dgl.. Der Dichtkörper 21 enthält im Inneren einen in sich geschlossenen Hohlraum 22. Die den Hohlraum 22, im Schnitt betrachtet, allseits begrenzenden Wandungsteile 23 des Dichtkörpers 21 sind verformungsfähig. Der Hohlraum 22 enthält eine möglichst gleichmäßige Füllung 24 aus für sich unverformbarem Material. Die Füllung 24 ist aus einer solchen Masse 25 gebildet, die unter leichtem äußeren Druck innerhalb des Hohlraumes 22 des Dichtkörpers 21 in allen Richtungen beweglich ist und fließen kann, bei erhöhtem äußeren Druck sich aber immer mehr verfestigt und bei hohem Druck einen starren Kern bildet, der ohne weitere Verformung oder Fließbewegung hohe Kräfte formschlüssig als fester Kern übertragen kann. Die Masse 25 ist somit bei hohem äußeren Druck vollkommen starr.

Die Füllung 24 ist insbesondere aus einer fließfähigen und körnigen Masse 25 gebildet. Bei einer solchen Masse 25 sind bei leichtem äußeren Druck gute Fließeigenschaften vorhanden, wobei diese Masse 25 aufgrund der Unverformbarkeit, vorzugsweise einer großen Härte, ihrer Komponenten bei hohem Druck große Kräfte übertragen kann.

Wird also nach Einlegen der Dichtungseinrichtung 10 in die Nut 18 des unteren Bauteiles 12 das obere Bauteil 11 aufgesetzt, so verschiebt sich aufgrund der Gewichtskraft des oberen Bauteiles 11 zunächst die Masse 25 im Hohlraum 22 aufgrund ihrer Fließeigenschaften. Durch diese Verschiebung der Masse 25 innerhalb des Dichtkörpers 21 ist ein Toleranzausgleich im Stoßbereich 13 und eine gleichmäßige Anlage des Dichtkörpers 21 an den Dichtflächen in Form der Nuten 17 und 18 und auch teilweise daran angrenzenden Bereich der Stirnflächen 15 und 16 erreicht. Danach wird auf das Bauteil 11 in gleicher Weise eine weitere Dichtungseinrichtung 10 aufgelegt und sodann ein weiteres Bauteil aufgesetzt. Auf diese Weise wird z. B. ein Schacht aus einzelnen Bauteilen 11, 12 und weiteren gebildet. Wenn der gesamte Schacht auf der Dichtungseinrichtung 10 aufliegt, ist keine weitere Verschiebung der Masse 25 innerhalb des Dichtkörpers 21 mehr möglich. Da die Komponenten der Masse 25 eine große Härte haben und inkompressibel sind, ist der sich aus der Masse 25 bildende Kern in der Lage, große Kräfte zu übertragen. Der Dichtkörper 21 mit relativ dünnwandigen Wandungsteilen 23 ist elastisch und wird gleichmäßig an die Dichtflächen angepreßt. Es entsteht so eine relativ große Dichtfläche. Da die Wandungsteile 23 des Dichtkörpers 21 relativ dünnwandig sein können, was angestrebt wird, um Material und Kosten zu sparen, und da der Dichtkörper 21 somit relativ großflächig anliegt, können im Anlagebereich große Kräfte übernommen werden, ohne daß eine weitergehende Verformung der Wandungsteile 23 des Dichtkörpers 21 entsteht.

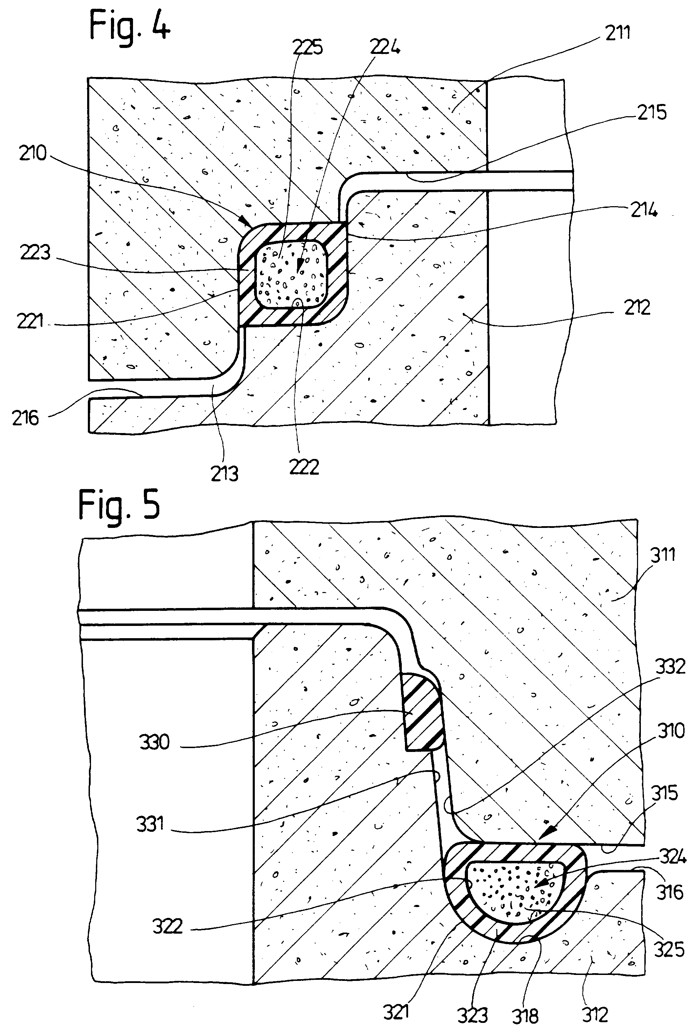

Mit zunehmender Schachthöhe des aus Bauteilen 11, 12 und weiteren aufgebauten Schachtes steigt der Anpreßdruck auf die einzelnen Dichtflächen, wo Dichtungseinrichtungen 10 angeordnet sind, proportional an. Somit kann der mit zunehmender Schachtlänge steigende Innen- oder Außen-Wasserdruck aufgrund zunehmender Dichtwirkung zuverlässig aufgenommen werden. Die Dichtungseinrichtung 10 kann ferner sowohl Planunebenheiten der einzelnen Bauteile 11, 12 als auch Toleranzabweichungen in Querrichtungen, z. B. im Durchmesser, problemlos aufnehmen und stets für eine gleichmäßige Kraftübertragung sorgen, so daß etwaige Punktlasten und dadurch bedingte hohe Belastungen, die zu Beschädigungen und Abplatzungen sowie zu Rissen oder komplettem Auseinanderbrechen führen können, zuverlässig vermieden sind. Ein Brechen der einzelnen Bauteile 11, 12 und weiterer ist ausgeschlossen. Außerdem werden Erschütterungen und Stöße abgedämpft, so daß eine hohe Lebensdauer der Bauteile 11,12 gewährleistet ist. Von Vorteil kann es sein, wenn je Einzelfall die Dichtungseinrichtung 10 einen Dichtkörper 21 aufweist, der nur als derartiges Ausgleichselement zur Vermeidung von Punktlasten und deren Folgen ausgebildet und eingesetzt ist. Dies ist z.B. bei Vorhandensein einer weiteren Dichtung (Fig. 5) möglich.

Von Vorteil ist ferner, daß die Herstellung der Dichtungseinrichtung 10 sehr einfach ist und wenig elastisches Material für den Dichtkörper 21, insbesondere dessen Wandungsteile 23, benötigt wird. Die Füllung 24 kann aus einem kostengünstigen und umweltfreundlichen Material bestehen, worauf später noch eingegangen wird. Bereits beim Transport einzelner Bauteile 11, 12 zur Baustelle, z. B. von Schachtringen, kann zwischen aufeinandergesetzte Bauteile 11, 12 die Dichtungseinrichtung 10 eingefügt werden, wodurch Beschädigungen der Bauteile 11, 12 beim Transport verhindert werden, da diese dann nicht Material auf Material, insbesondere Beton auf Beton, aneinander anliegen, sondern durch die zwischengefügte Dichtungseinrichtung 10 elastisch abgefangen und gedämpft sind. Von Vorteil ist hinsichtlich der Dichtungseinrichtung 10 ferner, daß die Shorehärte des Dichtkörpers 21, insbesondere seiner Wandungsteile 23, von geringem Einfluß ist, weil der Anpreßdruck durch die Füllung 24 im Hohlraum 22 erfolgt und ein Verpressen der Wandungsteile 23 nur notwendig ist, um z. B. eine vorhandene Rauhigkeit an den Bauteilen 11, 12 auszugleichen und dadurch eine Dichtwirkung zu erzielen. Die Shorehärte kann somit bei der Dichtungseinrichtung 10 relativ hoch sein, so daß über die Wandungsteile 23 auch relativ große Kräfte übertragen werden können, ohne daß sich die Wandungsteile 23 verformen, kriechen oder in sonstiger Weise Schaden nehmen. Da der Querschnitt der Wandungsteile 23 relativ gering gehalten werden kann, lassen sich Material und somit Kosten für den Dichtkörper 21 so gering wie möglich halten.

Die Dichtungseinrichtung 10 ist in der Lage, sowohl horizontale als auch vertikale Kräfte gleichmäßig zu übertragen. Sie kann auch größere Toleranzabweichungen ohne Schwierigkeiten ausgleichen. Ferner ist erreicht, daß die Dichtfläche, d. h. die mit der Außenfläche der Dichtungseinrichtung 10 in Berührung stehende Fläche im Stoßbereich 13, möglichst groß ist. Dies hat den Vorteil, daß Oberflächenundichtheiten, z. B. Löcher, Lunkerstellen, Lufteinschlüsse od. dgl.

Porösitäten, an den Dichtflächen der Bauteile 11, 12, insbesondere Betonteile, in einem möglichst großen Flächenbereich abgedichtet werden. Es ist also nicht nötig, die mit der Dichtungseinrichtung 10 in Berührung gelangenden Dichtflächen bei etwaiger Oberflächenporösität besonders zu behandeln, z. B. mit einem Anstrich zu versehen und deswegen auch einer ständigen Kontrolle zu unterziehen. Von Vorteil ist ferner, daß die Dichtungseinrichtung 10 kraftschlüssig wirken kann. Dies bedeutet, daß bei wechselnden vertikalen und horizontalen Kräften keine weiteren Verformungen an der Dichtungseinrichtung 10 bzw. Schwingungen entstehen, z. B. durch schwellende Verkehrslasten oder ähnliches. Die Dichtungseinrichtung ist kostengünstig herstellbar, wobei Toleranzen an der Dichtungseinrichtung 10 selbst nicht zu eng sein müssen, da diese aufgrund des ausgleichenden Verhaltens der Dichtungseinrichtung 10 ebenfalls ausgeglichen werden.

Beim ersten Ausführungsbeispiel in Fig. 1 bestehen die Bauteile 11, 12 jeweils aus Betonformteilen, und hierbei z. B. aus Schachtringen. Diese sind im wesentlichen rohrförmig, wobei sowohl ein runder als auch ein eckiger Querschnitt darunterfällt. In Anpassung daran besteht der Dichtkörper 21 aus einem Ringelement, insbesondere aus einem geschlossenen Endlosring, der also in Anpassung an die Bauteile 11, 12 kreisförmig oder etwa eckig verläuft. Handelt es sich bei den Bauteilen 11, 12 um z. B. viereckige Schachtelemente, so kann im Stoßbereich 13 je Wand auch ein separater Dichtkörper 21 vorgesehen werden, wobei dieser dann aus einem Streifen besteht.

Bei einem anderen, nicht gezeigten Ausführungsbeispiel bestehen die Bauteile 11, 12 z. B. aus vertikal aufeinandergesetzten Wandelementen,Mauerelementen od. dgl.. Hierbei kann es sich um plattenförmige Teile handeln. In Anpassung daran ist der Dichtkörper 21 im Stoßbereich 13 dann ebenfalls als längs verlaufender Streifen ausgebildet.

Auch in diesen Fällen ist genauso wie beim ersten Ausführungsbeispiel in Fig. 1 der Dichtkörper 21 im Stoßbereich 13 der Bauteile 11, 12 in einer Kammer 14 aufgenommen, wobei der Dichtkörper 31 nahezu mit seiner gesamten Außenfläche an bauteilseitigen Flächen, z. B. Ringflächen, anliegt derart, daß der Dichtkörper 21 zumindest im wesentlichen nur mit Druckkräften belastet ist. Dies wird dadurch erreicht, daß die Kammer 14 ausreichend tief bemessen ist, so tief, daß im fertigen Zustand bei belasteter Dichtungseinrichtung 10 die Stirnflächen 15 und 16 nur noch einen ganz geringen Abstand voneinander haben, ohne aufeinanderzuliegen.

Beim ersten Ausführungsbeispiel in Fig. 1 ist der Dichtkörper 21 in einer im Querschnitt etwa runden, insbesondere kreisrunden, Kammer 14 aufgenommen. Es versteht sich, daß Form und Größe der Kammer 14 auch anders beschaffen sein können. In Anpassung an die Kammer 14 in Fig. 1 weist der Dichtkörper 21 einen Rundquerschnitt, insbesondere Kreisquerschnitt, auf. Der Dichtkörper 21 ist in einfacher Weise z. B. aus einem Schlauch gebildet, und hierbei mit Vorzug aus durchsichtigem oder zumindest durchscheinendem Material, so daß man durch die Wandungsteile 23 hindurch die Füllung 24 erkennen und prüfen kann, ob der Dichtkörper 21 auch eine gleichmäßige Füllung 24 mit der Masse 25 enthält.

Die Masse 25 ist aus einem Granulat gebildet. Die Körner der Masse 25 sind zweckmäßigerweise rund, vorzugsweise kreisrund, so daß bei leichtem äußeren Druck gute Fließeigenschaften vorhanden sind. Dabei sind die Körner der Masse 25 hart und unverformbar, so daß bei hohem äußeren Druck in beschriebener Weise ein starrer Kern entsteht und dadurch große Kräfte übertragen werden können.

Die Masse 25 ist z. B. aus Quarzsand gebildet. Dieser ist nicht kompressibel und kann große Kräfte übertragen. Quarzsand ist außerdem außerordentlich kostengünstig und umweltfreundlich und steht praktisch in beliebiger Menge jederzeit zur Verfügung. Die Korngröße der Körner der Masse 25, insbesondere einer Quarzsandfüllung, kann etwa 1 mm bis 3 mm betragen. Bei dieser Korngröße ist eine möglichst gleichmäßige Kraftverteilung auf die elastischen Wandungsteile 23 des Dichtkörpers 21 gewährleistet.

Bei einem anderen Ausführungsbeispiel ist die Masse 25 statt dessen aus Steinmehl gebildet. Dieses kann eine sehr feine Korngröße im Bereich von 0 bis 0,1 mm haben. Statt dessen kommt auch ein Granulat für die Masse 25 in Betracht, z. B. ein Metallgranulat oder Granulat aus anderen Materialien, deren Korn eine große Härte hat. Auch hier ist es von Vorteil, wenn die Körner der Masse 25 rund, vorzugsweise kreisrund sind, so daß gute Fließeigenschaften bei geringem äußeren Druck bestehen und aufgrund großer Härte der einzelnen Körner bei großem äußeren Druck große Kräfte übertragen werden können.

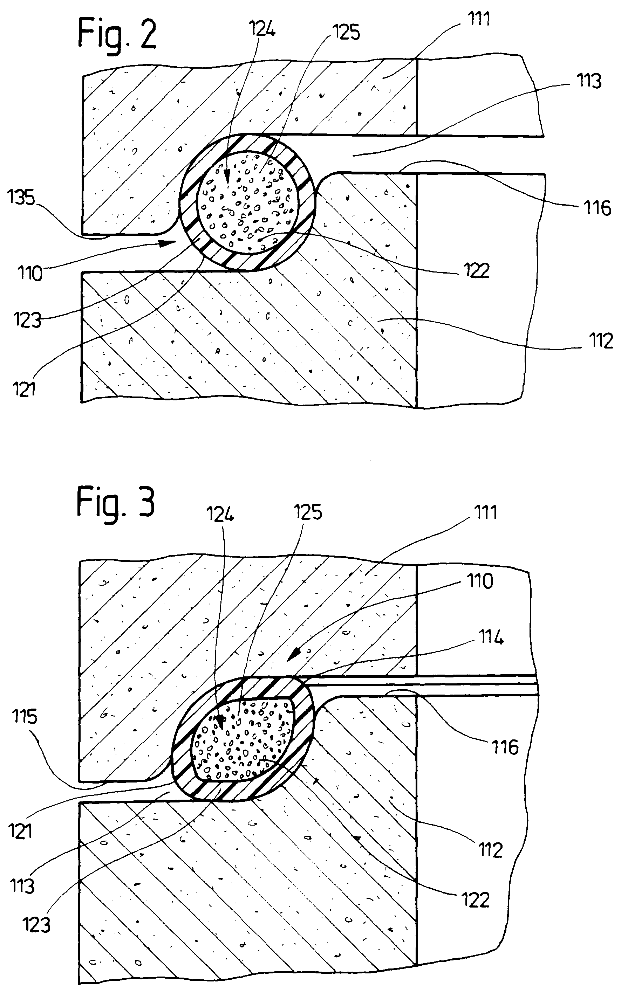

Bei dem in Fig. 2 und 3 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Beim zweiten Ausführungsbeispiel in Fig. 2 und 3 hat der Dichtkörper 121 im noch unbelasteten Zustand (Fig. 2) einen runden Querschnitt, insbesondere Kreisquerschnitt, etwa entsprechend dem ersten Ausführungsbeispiel in Fig. 1. Die Belastung der Dichtungseinrichtung 110 bei voll auflastendem oberen Bauteil 111 oberhalb des Bauteiles 112 zeigt Fig. 3.

In diesem belasteten Zustand ergibt sich für den Dichtkörper 121 ein etwa ovaler oder etwa eiförmiger Querschnitt, wobei die längere Halbachse nicht horizontal verläuft, sondern schräg gerichtet ist. Im Stoßbereich 113 ist zwischen den aufeinandersitzenden Bauteilen 111, 112 eine im Querschnitt etwa ovale oder eiförmige Kammer 114 gebildet, die für die entsprechende Verformung des Dichtkörpers 121 verantwortlich ist. In dieser Kammer 114 ist der Dichtkörper 121 aufgenommen, wobei er nahezu mit seiner gesamten Außenfläche an bauteilseitigen Flächen, insbesondere Ringflächen, der Bauteile 111, 112 anliegt, und zwar so, daß der Dichtkörper 121 zumindest im wesentlichen nur mit Druckkräften belastet ist. Die Stirnflächen 115, 116 der Bauteile 111, 112 sind als jeweils gestufte Schulterflächen und so ausgebildet, daß im belasteten Zustand gemäß Fig. 3 alle Belastungen, die auf die Dichtungseinrichtung 110 wirken, nur in Form von Druckkräften wirksam sind. Auch im belasteten Zustand gemäß Fig. 3 liegen die Bauteile 111, 112 mit ihren abgestuften Stirnflächen 115, 116 noch nicht aneinander an, sondern es besteht noch ein-wenn auch geringer-Zwischenraum. Eine Scherbeanspruchung des Dichtkörpers 121 ist praktisch ausgeschlossen.

Bei dem in Fig. 4 gezeigten dritten Ausführungsbeispiel sind die Stirnflächen 215, 216 der Bauteile 211, 212 so gestaltet, insbesondere abgestuft und bemessen, daß sich im gezeigten belasteten Zustand eine im Querschnitt etwa vieleckige, und zwar viereckige, Kammer 214 ergibt. Die Dichtungseinrichtung 210 kann auch bei diesem Ausführungsbeispiel im nicht belasteten Zustand einen Rundquerschnitt, z. B. Kreisquerschnitt,entsprechend Fig. 1, 2, aufweisen. Statt dessen kann die Dichtungseinrichtung 210 aber auch bereits im unbelasteten Zustand einen an die Kammer 214 angepaßten Vieleckquerschnitt, z. B. Viereckquerschnitt, aufweisen. Auch bei diesem dritten Ausführungsbeispiel in Fig. 4 ist der Dichtkörper 221 im Stoßbereich der Bauteile 211, 212 in der dazwischen gebildeten Kammer 214 aufgenommen, und zwar so, daß der Dichtkörper 221 nahezu mit seiner gesamten Außenfläche der Wandungsteile 223 an bauteilseitigen Flächen anliegt derart, daß der Dichtkörper 221 zumindest im wesentlichen nur mit Druckkräften belastet ist. Eine Scherbeanspruchung des Dichtkörpers 221 bei z. B. horizontal wirkenden Kräften ist hier auch dadurch ausgeschlossen, daß durch nur geringes Spiel zwischen den beiden Bauteilen 211, 212 in horizontaler Richtung eine Verschiebung zwischen den Bauteilen unmöglich ist, da diese unter Berücksichtigung der Toleranzen bei horizontalen Kräften formschlüssig aneinander anliegen.

Bei dem in Fig. 5 gezeigten vierten Ausführungsbeispiel der Dichtungseinrichtung 310 hat der unbelastete Dichtkörper 321 z.B. einen Kreisquerschnitt oder einen Halbrundquerschnitt, insbesondere Halbkreisquerschnitt. Mit seiner runden Seite ist dieser belastete Dichtkörper 321 in einer Nut 318 aufgenommen, die in der Stirnfläche 316 des unteren Bauteils 312 enthalten ist. Das andere, vertikal darüber befindliche Bauteil 311 sitzt mit einer dazu etwa parallelen ebenen Stirnfläche 315 auf dem Dichtkörper 321 vertikal auf.

Außerdem ist zwischen den beiden Bauteilen 311, 312 in axialem Abstand oberhalb der Dichtungseinrichtung 310 eine weitere Dichtung 330 in Form einer an sich bekannten Keildichtung vorgesehen, bei der ein entsprechender Dichtungsring auf einer stufigen Keilfläche 331 des unteren Bauteiles 312 formschlüssig aufsitzt, während eine andere Keilfläche 332 etwa gleicher Neigung am oberen Bauteil 311 von außen her an dem Dichtungsring anliegt. Diese Dichtung 30 zwischen den Keilflächen 331, 332 ist als Keildichtung bekannt, die normalerweise als einzige Dichtung zwischen vertikal aufeinandersitzenden Bauteilen 311, 312 vorgesehen wird. Eine solche Keildichtung ist nachteilig. Hierfür müssen die Toleranzen der Dichtung selbst eng gewählt werden, außerdem auch die Toleranzen der Shorehärte, weil durch diese zwei Faktoren wesentlich die Anpreßkraft der Dichtung 330 beeinflußt wird. Hierbei muß nämlich die Shorehärte relativ gering sein, damit eine gute Verpressung der Dichtung 330 erreicht wird und die Toleranzen ausgeglichen werden, ohne daß die Vorspannkräfte der Dichtung 330 enorm ansteigen. Bei einer solchen alleinigen Keildichtung 330 besteht außerdem der zusätzliche Nachteil, daß beim Aufsetzen des oberen Bauteiles 311, z. B. Betonteiles, die rauhe Keilfläche 332 an der Dichtung 330 entlanggleitet und dadurch die Dichtung 330 beschädigt werden kann.Daher wird üblicherweise die Keilfläche 332 mit einem Gleitmittel eingestrichen, um ein Aufsetzen des Bauteiles 311 und ein Verpressen der Keildichtung 330 als alleinige Dichtung überhaupt zu ermöglichen.

Dadurch, daß in axialem Abstand von der Keildichtung 330 die Dichtungseinrichtung 310 angeordnet ist, wird eine doppelte Dichtwirkung erzielt. Durch die Dichtungseinrichtung 310 werden vertikale Kräfte aufgenommen und unter zusätzlicher Dichtwirkung eine gleichmäßige Übertragung der vertikalen Kräfte erreicht. Von Vorteil ist dabei außerdem, daß die Shorehärte des Dichtkörpers 321 hier von geringem Einfluß ist, da der Anpreßdruck durch die Füllung 324 mit der Masse 325 erfolgt. Ein Verpressen der Wandungsteile 323 ist nur notwendig, um etwaige Oberflächenrauhigkeiten,z. B. die Rauhigkeit des Betons, auszugleichen und dadurch eine Dichtwirkung zu erzielen. Beim Dichtkörper 321 kann also die Shorehärte relativ hoch sein, so daß über dessen Wandungsteile 323 auch relativ große Kräfte übertragen werden können, ohne daß sich die Wandungsteile 323 verformen, kriechen oder sonstigen Schaden nehmen.

Bei der Herstellung einer Dichtungseinrichtung 10 bzw. 110 bzw. 210 bzw. 310 beschriebener Art kann man folgendermaßen vorgehen. Als Ausgangsmaterial wird ein Schlauch aus elastischem Material genommen, z. B. aus durchsichtigem oder zumindest durchscheinendem Gummi, Kunststoff od. dgl.. Dieser Schlauch wird an einem Ende dicht verschlossen, z. B. mittels eines eingeführten Stopfens. Sodann wird in den Hohlraum des etwa vertikal hängenden Schlauches eine fließfähige körnige Masse 25 eingefüllt, die die Füllung 24 bildet. Danach wird der Schlauch auch an diesem Einfüllende dicht verschlossen. Besteht das Wandungsmaterial 23 aus durchsichtigem oder zumindest durchscheinendem Material, so läßt sich sehr gut die richtige gleichmäßige Befüllung von außen erkennen. Wenn die Dichtungseinrichtung, die auf diese Weise hergestellt wird, einen geradlinigen, streifenförmigen Dichtkörper 21 ergeben soll, wäre dieser damit fertiggestellt. Wenn statt dessen ein Dichtkörper in Form eines Ringelementes, insbesondere eines geschlossenen Endlosringes, hergestellt werden soll, wie er bei allen Ausführungsbeispielen in Fig. 1 - 4 erläutert ist, so wird nach dem Einbringen der Füllung 24 der Schlauch zu einem Endlosring dicht verschlossen. Diese Herstellung der Dichtungseinrichtung 10 ist einfach und kostengünstig.

Lediglich in Fig. 1 ist gestrichelt angedeutet, daß der Dichtkörper 21 eine Armierung 26 aufweisen kann. In gleicher Weise können auch die Dichtkörper bei den anderen Ausführungsbeispielen in Fig. 2 - 5 gestaltet sein. Dies gilt auch für alle nachfolgenden weiteren Details, die anhand von Fig. 1 hinsichtlich dieser Armierung 26 erläutert sind.

Die Armierung 26 ist beim Ausführungsbeispiel in Fig. 1 in den Wandungsteilen 23 des Dichtkörpers 21 angeordnet. Sie befindet sich hier innerhalb des Wandungsquerschnittes der Wandungsteile 23, ist also in das Fleisch der Wandungsteile 23 eingebettet. Auch ein Schichtaufbau des Dichtkörpers 21 ist möglich, d.h. eine Gestaltung bestehend aus einem Innenschlauch, auf dem die Armierung 26 aufgebracht ist, und einem daraufgezogenen Außenschlauch. Der Außenschlauch kann mit dem Innenschlauch und/oder der Armierung 26 fest verbunden sein oder er ist damit einstückig. Die Armierung 26 erstreckt sich vorzugsweise über den ganzen Umfang des Dichtkörpers 21. Sie ist als Mantel ausgebildet.

In den Fällen, in denen der Dichtkörper 21 als länglicher Streifen und nicht, wie in Fig. 1, als Endlosring, ausgebildet ist, können auch die Enden des länglichen Streifens bedarfsweise zusätzlich armiert sein. Sie können auch aus anderem Material als die Wandungsteile 23, z.B. aus festeren Stopfen oder ähnlichem, bestehen.

Die Armierung 26 besteht mit Vorzug aus einem Gewebe oder Gestricke oder Gewirke od. dgl., und hierbei z.B. aus Fasermaterial, wie z.B. aus Glasfasern, Textilfasern, Stahlfasern od. dgl. Durch die Armierung 26 ist eine Verfestigung des Dichtkörpers 26 und ein Schutz gegen etwaige Beschädigungen erreicht. Die Armierung 26 ist in der Lage, Zugkräfte aufzunehmen, insbesondere solche, die beim Dichtkörper 21 in Fig. 1 in Umfangsrichtung wirken und z.B. auf eine elastische Vergrößerung des Querschnitts der Dichtungseinrichtung 10 hinwirken könnten. Auch ist durch die Armierung 26 ein etwaiges Kriechen des elastischen Materials, aus dem die Wandungsteile 23 ansonsten bestehen, verhindert. Ferner bietet die Armierung 26 einen Schutz gegen äußere bzw. innere Beschädigung der Wandungsteile 23. Diese Vorteile, die durch die Armierung 26 erzielt werden, gleichen einen Verlust an Dehnung des Dichtkörpers 21 im Umfang aus.

Bei einem anderen, nicht gezeigten Ausführungsbeispiel ist die Armierung 26 nicht innerhalb des Wandungsquerschnittes sondern auf der dem Hohlraum 22 zugekehrten Innenseite der Wandungsteile 23 angeordnet. Die Armierung 26 z.B. in Form eines Schlauches befindet sich in diesem Fall also im Hohlraum 22. Statt dessen kann die Armierung 26 auch auf der Außenseite der Wandungsteile 23 angeordnet sein, wobei sie dann als Außenmantel fungiert. Die Anordnung der Armierung 26 an der Innenseite oder an der Außenseite der Wandungsteile 23 hat den Vorteil, daß hierbei die Armierung 26 schnell und einfach einbringbar ist, z.B. als Schlauch in den Hohlraum 22 einführbar bzw. über den Dichtkörper 21 ziehbar ist.

Von Vorteil kann es ferner für sämtliche Ausführungsbeispiele sein, wenn im Hohlraum 22 bzw. 122 bzw. 222 bzw. 322 des Dichtkörpers 21 bzw. 121 bzw. 221 bzw. 321 ein Gleitmittel angeordnet ist. Ein solches Gleitmittel hat den Vorteil, daß es die Haftreibung reduziert und damit die Gleitfähigkeit steigern kann. Dabei kann das Gleitmittel innerhalb der Masse 25 bzw. 125 bzw. 225 bzw. 325 angeordnet sein, z.B. so, daß die einzelnen Körner der Masse auf ihrer Oberfläche oder zumindest auf einem Teil dieser dieses Gleitmittel tragen und somit die Füllung 24 bzw. 124 bzw. 224 bzw. 324 sich aufgrund reduzierter Haftreibung leichter im Raum verändern kann. Zusätzlich dazu oder statt dessen kann das Gleitmittel natürlich auch auf der Innenseite des Dichtkörpers, insbesondere der Wandungsteile 23 bzw. 123 bzw. 223 bzw. 323, vorgesehen sein, die dem Hohlraum 22 bzw. 122 bzw. 222 bzw. 322 zugewandt ist. Dadurch wird die Haftreibung zwischen den einzelnen Körnern der Masse und dieser Innenseite der Wandungsteile reduziert und somit insgesamt die Gleitfähigkeit erhöht.

Insbesondere bei dem Ausführungsbeispiel in Fig. 5, bei dem die Dichtungseinrichtung 310 einen Dichtkörper 321 und eine weitere Dichtung 330 aufweist, kann es von Vorteil sein, daß der Dichtkörper 321 keine Dichtungsfunktion ausübt sondern nur die Funktion als Ausgleichselement zur Vermeidung von Punktlasten. Dann kann dieses Ausgleichselement auch in einzelne,eigenständige Teile, z.B. Längsstreifen, Bogenstücke od.dgl., unterteilt sein und muß nicht ein geschlossenes Teil darstellen.

## Patentansprüche

1. Dichtungseinrichtung für aneinanderstoßende Bauteile, insbesondere Betonformteile, z. B. Straßen- oder Hofabläufe, Schachtringe, Schachthälse, Schornsteinelemente, Wand- oder Mauerelemente, Rohre od. dgl., mit zumindest einem durch Kompression im Stoßbereich verformbaren Oichtkörper aus zumindest im wesentlichen elastischem Material, der in einem inneren Hohlraum eine Füllung enthält,
**dadurch gekennzeichnet**,
daß die Füllung (24; 124; 224; 324) aus einer unter leichtem äußeren Druck innerhalb des Hohlraumes (22; 122; 222; 322) des Dichtkörpers (21; 121; 221; 321) in allen Richtungen beweglichen, bei erhöhtem äußeren Druck sich zunehmend verfestigenden und bei hohem Druck einen starren Kern bildenden Masse (25; 125; 225; 325) gebildet ist.

2. Dichtungseinrichtung nach Anspruch 1,
**dadurch gekennzeichnet**,
daß die Füllung (24; 124; 224; 324) aus einer fließfähigen körnigen Masse (25; 125; 225; 325) gebildet ist.

3. Dichtungseinrichtung nach Anspruch 1 oder 2,
d**adurch gekennzeichnet**,
daß die Masse (25; 125; 225; 325) aus einem Granulat gebildet ist.

4. Dichtungseinrichtung nach einem der Ansprüche 1 - 3,
**dadurch gekennzeichnet**,
daß die Körner der Masse (25; 125; 225; 325) rund, vorzugsweise kreisrund, sind.

5. Dichtungseinrichtung nach einem der Ansprüche 1 - 4,
**dadurch gekennzeichnet**,
daß die Körner der Masse (125; 225; 325) hart und unverformbar sind.

6. Dichtungseinrichtung nach einem der Ansprüche 1 - 5,
**dadurch gekennzeichnet**,
daß die Masse (25; 125; 225;325) aus Quarzsand, Glas od. dgl. gebildet ist.

7. Dichtungseinrichtung nach einem der Ansprüche 1 - 5,
**dadurch gekennzeichnet**,
daB die Masse (25; 125; 225; 325) aus Steinmehl gebildet ist, z. B. mit einer Korngröße etwa im Bereich von 0 bis 0,1 mm.

8. Dichtungseinrichtung nach einem der Ansprüche 1 - 5,
**dadurch gekennzeichnet**,
daß die Masse (25; 125; 225; 325) aus Metall-Granulat gebildet ist.

9. Dichtungseinrichtung nach einem der Ansprüche 1 - 8,
**dadurch gekennzeichnet**,
daß die Korngröße der Körner der Masse (25; 125; 225; 325), insbesondere des Quarzsandes, etwa 1 mm bis 3 mm beträgt.

10. Dichtungseinrichtung nach einem der Ansprüche 1 - 9,
**dadurch gekennzeichnet**,
daß die den Hohlraum (22; 122; 222; 322) begrenzenden Wandungsteile (23; 123; 223; 323) des Dichtkörpers (21; 121; 221; 321) verformungsfähig sind.

11. Dichtungseinrichtung nach einem der Ansprüche 1 - 10,
**dadurch gekennzeichnet**,
daß der Dichtkörper (21; 121; 221; 321) aus durchsichtigem oder zumindest durchscheinendem Material gebildet ist.

12. Dichtungseinrichtung nach einem der Ansprüche 1 - 11,
**dadurch gekennzeichnet**,
daß der Dichtkörper (21; 121; 221; 321) aus elastischem Gummi, Kunstgummi, einem elastomeren Kunststoff oder aus dergleichen elastischem Material gebildet ist.

13. Dichtungseinrichtung nach einem der Ansprüche 1 - 12,
**dadurch gekennzeichnet**,
daß der Dichtkörper (21; 121; 221; 321) aus einem Schlauch gebildet ist.

14. Dichtungseinrichtung nach einem der Ansprüche 1 - 13,
**dadurch gekennzeichnet**,
daß der Dichtkörper (21; 121; 221; 321) einen Rundquerschnitt, z. B. Kreisquerschnitt, oder einen Halbrundquerschnitt, z. B. Halbkreisquerschnitt,oder einen Vieleckquerschnitt, z. B. Viereckquerschnitt, aufweist.

15. Dichtungseinrichtung nach einem der Ansprüche 1 - 14,
**dadurch gekennzeichnet**, daß der Dichtkörper (21; 121; 221; 321) ein Ringelement ist.

16. Dichtungseinrichtung nach einem der Ansprüche 1 - 15,
**dadurch gekennzeichnet**,
daß der Dichtkörper (21; 121; 221; 321) ein geschlossener Endlosring ist.

17. Dichtungseinrichtung nach einem der Ansprüche 1 - 16,
**dadurch gekennzeichnet**,
daß der Dichtkörper (21; 121; 221) im Stoßbereich (13; 113; 213) der Bauteile (11, 12; 111, 112; 211, 212) in einer Kammer (14; 114; 214) aufgenommen ist und nahezu mit seiner gesamten Außenfläche an bauteilseitigen Flächen, isbesondere Ringflächen, anliegt, derart, daß der Dichtkörper (21; 121; 221) zumindest im wesentlichen nur mit Druckkräften belastet ist.

18. Dichtungseinrichtung nach Anspruch 17,
**dadurch gekennzeichnet,**
daß der Dichtkörper (21; 121; 221) in einer im Querschitt etwa runden Kammer (14) oder ovalen oder eiförmigen Kammer (114) oder in einer im Querschnitt etwa vieleckigen, z. B. viereckigen,Kammer (214) aufgenommen ist.

19. Dichtungseinrichtung nach einem der Ansprüche 1 - 18,
**dadurch gekennzeichnet**,
daß der Dichtkörper (321) in einer stirnseitig eingetieften Nut (318) des einen unteren Bauteiles (312) aufgenommen ist und das darüber befindliche andere Bauteil (311) mit einer dazu etwa parallelen ebenen Stirnfläche (315) auf dem Dichtkörper (321) vertikal aufsitzt.

20. Dichtungseinrichtung nach einem der Ansprüche 1 - 19,
**dadurch gekennzeichnet**,
daß zwischen den beiden Bauteilen (311; 312) in axialem Abstand vom Dichtkörper (321) eine weitere Dichtung (330) in Form einer an sich bekannten Keildichtung angeordnet ist.

21. Dichtungseinrichtung nach einem der Ansprüche 1 - 20,
**dadurch gekennzeichnet**,
daß der Dichtkörper (21; 121; 221; 321) im Stoßbereich (13; 113; 213; 313) zweier übereinander angeordneter Bauteile (11, 12; 111; 112; 211, 212; 311, 312) angeordnet und von den vertikal wirkenden Gewichtskräften an die Dichtflächen im Stoßbereich (13; 113; 213; 313) anpreßbar ist.

22. Dichtungseinrichtung nach einem der Ansprüche 1 - 21,
**dadurch gekennzeichnet,**
daß der Dichtkörper (21; 121; 221; 321) eine Armierung (26) aufweist.

23. Dichtungseinrichtung nach Anspruch 22,
**dadurch gekennzeichnet,**
daß die Armierung (26) an oder in den Wandungsteilen (23; 123; 223; 323) des Dichtkörpers (21; 121; 221; 321) angeordnet ist, insbesondere innerhalb des Wandungsquerschnittes oder auf der Außenseite oder auf der dem Hohlraum (22; 122; 222; 322) zugekehrten Innenseite der Wandungsteile (23; 123; 223; 323) angeordnet ist.

24. Dichtungseinrichtung nach Anspruch 22 oder 23,
**dadurch gekennzeichnet,**
daß sich die Armierung (26) über den ganzen Umfang des Dichtkörpers (21; 121; 221; 321) erstreckt.

25. Dichtungseinrichtung nach einem der Ansprüche 22 - 24,
**dadurch gekennzeichnet**,
daß die Armierung (26) als Mantel oder Schlauch ausgebildet ist.

26. Dichtungseinrichtung nach einem der Ansprüche 22 - 25,
**dadurch gekennzeichnet**,
daß die Armierung (26) aus einem Gewebe oder Gestricke oder Gewirke od. dgl. besteht.

27. Dichtungseinrichtung nach einem der Ansprüche 22 - 26,
**dadurch gekennzeichnet**,
daß die Armierung aus Fasermaterial besteht, insbesondere aus Glasfasern, Textilfasern, Stahlfasern od. dgl.

28. Dichtungseinrichtung nach einem der Ansprüche 1 - 27,
**dadurch gekennzeichnet**,
daß im Hohlraum (22; 122; 222; 322) des Dichtkörpers (21; 121; 221; 321), insbesondere an der dem Hohlraum zugewandten Innenseite und/oder in der Masse (25; 125; 225; 325), ein Gleitmittel angeordnet ist.

29. Verfahren zur Herstellung einer Dichtungseinrichtung nach Anspruch 1,
**dadurch gekennzeichnet**,
daß ein Schlauch aus elastischem Material an einem Ende dicht verschlossen wird, sodann in den Hohlraum des etwa vertikal hängenden Schlauches eine fließfähige körnige Masse (25) eingefüllt wird und danach der Schlauch zu einem Streifen oder zu einem Endlosring dicht verschlossen wird.

## Claims

1. Sealing device for abutting constructional elements, especially concrete formed elements, eg road or yard run-offs, shaft rings, shaft necks, chimney elements, wall or side elements, tubes or similar elements, comprising at least one sealing body compression-deformable in the abutting region formed from at least substantially elastic material which comprises a filling in an interior hollow space,
characterised in that
the filling (24;124;224;324) is formed from a mass (25;125;225;325) which under a small outside pressure is movable in all directions within the hollow space (22;122;222;322) of the sealing body (21;121;221;321), under increased outside pressure increasingly hardens and under high pressure forms a rigid core.

2. Sealing device according to claim 1,
characterised in that
the filling (24; 124;224;324) is formed from a flowable, granular mass (25;125;225;325).

3. Sealing device according to claim 1 or 2,
characterised in that
mass (25;125;225;325) is formed from a granulate.

4. Sealing device according to one of the claims 1 to 3,
characterised in that
the grains of the mass (25,125,225,325) are round, preferably circular.

5. Sealing device according to one of the claims 1 to 4,
characterised in that
the grains of mass (125;225;325) are hard and non-deformable.

6. Sealing device according to one of the claims 1 to 5,
characterised in that the mass (25;125;225;325) is formed from quartz sand, glass or a similar material.

7. Sealing device according to one of the claims 1 to 5,
characterised in that
the mass (25;125;225;325) is formed from stone meal, for example with a grain size in the region from 0 to 0.1 Imm.

8. Sealing device according to one of the claims 1 to 5,
characterised in that
the mass (25;125;225;325) is formed from a metal granulate.

9. Sealing device according to one of the claims 1 to 8,
characterised in that
the grain size of the grains ofthe mass (25;125;225;325), especially of the quartz sand is about 1mm to 3mm.

10. Sealing device according to one of the claims 1 to 9,
characterised in that
the wall elements (23;123;23;323) ofthe sealing elements (21;121;221;321) limiting the hollow space (22;122;222;322) are deformable.

11. Sealing device according to one of the claims 1 to 10,
characterised in that
the sealing element (21;121;221;321) is formed from transparent or at least translucent material.

12. Sealing device according to one of the claims 1 to 11,
characterised in that
the sealing element (21;121;221;321) is formed from elastic rubber, artificial rubber, and elastomeric plastic or a similar elastomeric material.

13. Sealing device according to one of the claims 1 to 12,
characterised in that
the sealing body (21;121;221;321) is formed from a tube.

14. Sealing device according to one of the claims 1 to 13,
characterised in that
the sealing body (21;121;221;321) has a round cross-section, for example a circular cross-section, or a half round cross-section, for example a half circular cross section or a polygon cross-section, for example a quadrangular cross-section.

15. Sealing device according to one of the claims 1 to 14
characterised in that
the sealing body (21;121;221;321) in an annular element.

16. Sealing device according to. one of the claims 1 to 15
characterised in that
the sealing body (21;121;221;321) is a closed continuous ring.

17. Sealing device according to one of the claims 1 to 16,
characterised in that
the sealing body (121;221;321) in the abutting region (13;113;213) ofthe constructional elements (11,12;111,112;211,212) is received in a chamber (14;114;214) and with nearly its whole outer surface bears against constructional-element-side surfaces, especially annular surfaces, in such a way that the sealing body (21;121;221;) at least substantially, is only subject to pressure loading.

18. Sealing device according to claim 17,
characterised in that
the sealing body (21;121;221) is received in a chamber (14) with a cross-section which is approximately round, or an oval or egg shaped chamber (114), or in a chamber (214) with a cross-section which is approximately polygonal, for example quadrangular.

19. Sealing device according to one of the claims 1 to 18,
characterised in that
the sealing body (321) is received in a front-sided recessed groove (318) of the one lower constructional element (312) and that the thereover arranged other constructional element (311) with a thereto approximately parallel planar front side (315) vertically rests upon the sealing body (321)

20. Sealing device according to one of the claims 1 to 19,
characterised in that
between the two constructional elements (311,312) at an axial distance from the sealing body (321) a further sealing element (330) in the form of a known wedge sealing element is arranged.

21. Sealing device according to one of the claims 1 to 20,
characterised in that
the sealing element (21;121;221;321) is arranged in the abutting region (13;113;213;313) of two constructional elements (11,12;111,112;211,212;311,312) arranged over one another and is pressable against the sealing surfaces in the abutting region (13;113;213;313) by the vertically acting weight forces.

22. Sealing device according to one of the claims 1 to 21, characterised in that the sealing body (21;121;221;321) comprises a reinforcement (26)

23. Sealing device according to claim 22,
characterised in that
the reinforcement (26) is arranged at or in the wall elements (23; 123;223;323) of the sealing body (21;121;221;321), especially within the wall cross-section or on the outer side or on the inner side facing the hollow space (22,122,222,322) of the wall elements (23;123;223;323).

24. Sealing device according to, claim 22 or 23,
characterised in that
the reinforcement (26) extends over the whole circumference of the sealing body (21;121;221;321)

25. Sealing device according to one the claims 22 to 24,
characterised in that
the reinforcement (26) is formed as a sheath or a tube.

26. Sealing device according to one of the claims 22 to 25,
characterised in that
the reinforcement (26) consists of a woven fabric or a knit fabric or a wool-knitted fabric or a similar fabric.

27. Sealing device according to one of the claims 22 to 26,
characterised in that
the reinforcement consists of a fiber material, especially of glass fibers, textile fibers, steel fibers or similar fibers.

28. Sealing device according to one of the claims 1 to 27,
characterised in that
a lubricant is arranged in the hollow space (22;122;222;322) ofthe sealing body (21;121;221;321), especially at the inner surface facing the hollow space and/or in the mass (25;125;225;325).

29. Method for manufacturing a sealing device according to claim 1,
characterised in that
a tube formed from elastic material is tightly sealed at one end, then a flowable granular mass (25) is filled into the hollow space of the approximately vertically hanging tube, and then the tube is tightly sealed to form a strip or a continuous ring.

## Revendications

1. Joint d'étanchéité pour éléments de construction en contact, pour éléments en béton en particulier, tels qu'avaloirs de chaussée ou de cour, anneaux de cuvelage, bouches de puits, éléments de cheminée, éléments de paroi ou de maçonnerie, tuyaux, ou autres, avec au moins un corps d'étanchéité, déformable par compression dans la zone de contact, composé d'un matériau essentiellement élastique, au moins, et comportant un garnissage dans un espace creux interne, caractérisé en ce que le garnissage (24; 124; 224; 324) est formé d'une masse (25; 125; 225; 325), mobile dans toutes les directions à l'intérieur de L'espace creux (22; 122; 222; 322) du corps d'étanchéité (21; 121; 221; 321), sous l'effet d'une légère pression externe, se consolidant de plus en plus sous l'effet d'une pression externe accrue, et formant un noyau rigide sous l'effet d'une forte pression.

2. Joint d'étanchéité suivant la revendication 1, caractérisé en ce que le garnissage (24; 124; 224; 324) est formé d'une masse (25; 125; 225; 325), granuleuse et fluide.

3. Joint d'étanchéité suivant l'une des revendications 1 et 2, caractérisé en ce que la masse (25; 125; 225; 325) est formée d'un granulat.

4. Joint d'étanchéité suivant l'une des revendications 1 à 3, caractérisé en ce que les grains de la masse (25; 125; 225; 325) sont ronds, circulaires de préférence.

5. Joint d'étanchéité suivant l'une des revendications 1 à 4, caractérisé en ce que les grains de la masse (125; 225; 325) sont durs et indéformables.

6. Joint d'étanchéité suivant l'une des revendications 1 à 5, caractérisé en ce que la masse (25; 125; 225; 325) est formée de sable quartzeux, de verre, ou autres.

7. Joint d'étanchéité suivant l'une des revendications 1 à 5, caractérisé en ce que la masse (25; 125; 225; 325) est formée de fines de carrière, d'une grosseur de grains de l'ordre de 0 à 0,1 mm par exemple.

8. Joint d'étanchéité suivant l'une des revendications 1 à 5, caractérisé en ce que la masse (25; 125; 225; 325) est formée de granulat de métal.

9. Joint d'étanchéité suivant L'une des revendications 1 à 8, caractérisé en ce que la grosseur des grains de la masse (25; 125; 225; 325), du sable quartzeux en particulier, est de l'ordre de 1 à 3 mm.

10. Joint d'étanchéité suivant l'une des revendications 1 à 9, caractérisé en ce que les éléments de paroi (23; 123; 223; 323) du corps d'étanchéité (21; 121; 221; 321), qui limitent l'espace creux (22; 122; 222; 322), sont déformables.

11. Joint d'étanchéité suivant l'une des revendications 1 à 10, caractérisé en ce que le corps d'étanchéité (21; 121; 221; 321) est formé d'un matériau transparent ou au moins translucide.

12. Joint d'étanchéité suivant l'une des revendications 1 à 11, caractérisé en ce que le corps d'étanchéité (21; 121; 221; 321) est formé de caoutchouc élastique, de caoutchouc synthétique, d'une matière plastique élastomère, ou d'un autre matériau élastique.

13. Joint d'étanchéité suivant l'une des revendications 1 à 12, caractérisé en ce que le corps d'étanchéité (21; 121; 221; 321) se compose d'un flexible.

14. Joint d'étanchéité suivant l'une des revendications 1 à 13, caractérisé en ce que le corps d'étanchéité (21; 121; 221; 321) présente une section ronde, une section circulaire par exemple, ou une section demi-ronde, une section semi-circulaire par exemple, ou une section polygonale, une section quadrangulaire par exemple.

15. Joint d'étanchéité suivant l'une des revendications 1 à 14, caractérisé en ce que le corps d'étanchéité (21; 121; 221; 321) est un élément annulaire.

16. Joint d'étanchéité suivant l'une des revendications 1 à 15, caractérisé en ce que le corps d'étanchéité (21; 121; 221; 321) est une bague sans fin fermée.

17. Joint d'étanchéité suivant l'une des revendications 1 à 16, caractérisé en ce que le corps d'étanchéité (21; 121; 221) est logé dans un compartiment (14; 114; 214) dans la zone de contact (13; 113; 213) des éléments de construction (11, 12; 111, 112; 211, 212), et s'applique par la quasitotalité de sa surface externe sur des surfaces côté éléments de construction, sur des surfaces annulaires en particulier, de sorte que le corps d'étanchéité (21; 121; 221) n'est sollicité, essentiellement du moins, que par des forces de pression.

18. Joint d'étanchéité suivant la revendication 17, caractérisé en ce que le corps d'étanchéité (21; 121; 221) est logé dans un compartiment (14), à peu près rond en coupe transversale, ou dans un compartiment (114) ovale ou ovoide, ou dans un compartiment (214) à peu prés polygonal, quadrangulaire par exemple, en coupe transversale.

19. Joint d'étanchéité suivant l'une des revendications 1 à 18, caractérisé en ce que le corps d'étanchéité (321) est logé dans une rainure (318), creusée côté frontal, de l'un des éléments de construction inférieur (312), l'autre élément de construction (311), sus-jacent, reposant verticalement sur le corps d'étanchéité (321) par une surface frontale (315) plane, à peu près parallèle à ce dernier.

20. Joint d'étanchéité suivant l'une des revendications 1 à 19, caractérisé en ce qu'un autre joint (330), en forme d'un joint cunéiforme connu en soi, est disposé entre les deux éléments de construction (311, 312), à une certaine distance axiale du corps d'étanchéité (321).

21. Joint d'étanchéité suivant l'une des revendications 1 à 20, caractérisé en ce que le corps d'étanchéité (21; 121; 221; 321) est disposé dans la zone de contact (13; 113; 213; 313) de deux éléments de construction (11, 12; 111, 112; 211, 212; 311, 312) superposés, et peut être pressé par les poids, agissant dans le sens vertical, sur les surfaces d'étanchéité, dans la zone de contact (13; 113; 213; 313).

22. Joint d'étanchéité suivant l'une des revendications 1 à 21, caractérisé en ce que le corps d'étanchéité (21; 121; 221; 321) présente une armature (26).

23. Joint d'étanchéité suivant la revendication 22, caractérisé en ce que l'armature (26) est disposée sur ou dans les éléments de paroi (23; 123; 223; 323) du corps d'étanchéité (21; 121; 221; 321), en particulier à l'intérieur de la section de paroi, ou sur le côté externe, ou sur le côté interne, tourné vers l'espace creux (22; 122; 222; 322) des éléments de paroi (23; 123; 223; 323).

24. Joint d'étanchéité suivant l'une des revendications 22 et 23, caractérisé en ce que l'armature (26) s'étend sur la totalité du pourtour du corps d'étanchéité (21; 121; 221; 321).

25. Joint d'étanchéité suivant l'une des revendications 22 à 24, caractérisé en ce que l'armature (26) est réalisée sous forme de gaine ou de flexible.

26. Joint d'étanchéité suivant l'une des revendications 22 à 25, caractérisé en ce que l'armature (26) se compose d'un tissu ou d'un tricot ou d'un tissu à mailles, ou autres.

27. Joint d'étanchéité suivant l'une des revendications 22 à 26, caractérisé en ce que l'armature se compose d'un matériau fibreux, en particulier de fibres de verre, de fibres textiles, de fibres d'acier, ou autres.

28. Joint d'étanchéité suivant l'une des revendications 1 à 27, caractérisé en ce qu'un lubrifiant est disposé dans l'espace creux (22; 122; 222; 322) du corps d'étanchéité (21; 121; 221; 321), en particulier sur le côté interne tourné vers l'espace creux et/ou dans la masse (25; 125; 225; 325).

29. Procédé de fabrication d'un joint d'étanchéité suivant la revendication 1, caractérisé en ce qu'un flexible en matériau élastique est fermé hermétiquement sur une extrémité, puis une masse (25), granuleuse et fluide, est chargée dans l'espace creux du flexible, en suspension à peu près dans le sens vertical, le flexible étant ensuite hermétiquement fermé en un ruban ou en une bague sans fin.
